# EUROPEAN PATENT APPLICATION

(11) **EP 4 749 415 A1**
(43) Date of publication of application: **27.05.2026**
(21) Application number: 24910492.8
(22) Date of filing: 27.11.2024
(51) Int. Cl.: G06F 3/044

(54) **TOUCH DISPLAY PANEL, TOUCH DISPLAY APPARATUS AND ELECTRONIC SYSTEM**

(30) Priority: 27.12.2023 CN 202311831805
(71) Applicant: HUAWEI TECHNOLOGIES CO., LTD., Shenzhen 518129 (CN)
(72) Inventor: CHEN, Zesheng, Shenzhen, Guangdong 518129 (CN); ZHANG, Junyong, Shenzhen, Guangdong 518129 (CN)
(74) Representative: Gill Jennings & Every LLP
(86) International application number: PCT/CN2024/134908
(87) International publication number: WO 2025/139559

(57) **Abstract**

This application relates to the field of display technologies, and in particular, to a touch display panel, a touch display apparatus, and an electronic system. The touch display panel includes a touch electrode layer. The touch electrode layer includes a plurality of touch repetition units. The touch repetition unit includes a first grid and a second grid that are insulated from each other. The first grid includes a plurality of first touch electrodes and a plurality of first touch sub-electrodes. The plurality of first touch electrodes are spaced apart in a first direction, and every two adjacent first touch electrodes are electrically connected through at least one first touch sub-electrode. The second grid includes a plurality of second touch electrodes, and the plurality of second touch electrodes are spaced apart in the first direction. In the first direction, the first touch electrodes and the second touch electrodes are staggered, and a ratio of a width of the first touch electrode or a width of the second touch electrode to a width of the touch repetition unit is less than a preset value. Magnetic fields between the first touch electrodes and the second touch electrodes in the touch display panel are uniformly distributed, to improve writing consistency of a stylus.

## Description

### CROSS-REFERENCE TO RELATED APPLICATIONS

This application claims priority to Chinese Patent Application No. 202311831805.6, filed with the China National Intellectual Property Administration on December 27, 2023 and entitled "TOUCH DISPLAY PANEL, TOUCH DISPLAY APPARATUS, AND ELECTRONIC SYSTEM", which is incorporated herein by reference in its entirety.

### TECHNICAL FIELD

This application relates to the field of display technologies, and in particular, to a touch display panel, a touch display apparatus, and an electronic system.

### BACKGROUND

With development of display technologies, touch display apparatuses with a touch function have been widely used in electronic products such as foldable mobile phones and foldable notebook computers. To ensure that a touch display apparatus can be folded with an electronic device, a thickness of the touch display apparatus needs to be reduced, to meet a folding requirement of the electronic device. However, thinning the touch display apparatus results in poor writing effect of a capacitive stylus during writing on the touch display apparatus.

### SUMMARY

Embodiments of this application provide a touch display panel, a touch display apparatus, and an electronic system. Magnetic fields between first touch electrodes and second touch electrodes in the touch display panel are uniformly distributed, to improve writing consistency of a stylus.

According to a first aspect, this application provides a touch display panel. The touch display panel includes a touch electrode layer, and the touch electrode layer includes a plurality of touch repetition units. The touch repetition unit includes a first grid and a second grid that are insulated from each other. The first grid includes a plurality of first touch electrodes and a plurality of first touch sub-electrodes. The plurality of first touch electrodes are spaced apart in a first direction, the first touch electrode extends in a second direction, and every two adjacent first touch electrodes are electrically connected through at least one first touch sub-electrode. The second grid includes a plurality of second touch electrodes, the plurality of second touch electrodes are spaced apart in the first direction, and the second touch electrode extends in the second direction. In the first direction, the first touch electrodes and the second touch electrodes are staggered, and a ratio of a width of the first touch electrode or a width of the second touch electrode to a width of the touch repetition unit is less than a preset value. This arrangement manner allows for more uniform distribution of magnetic fields between the first touch electrodes and the second touch electrodes. When a touch signal of a stylus is transmitted to a surface of the touch display panel, fluctuation in a change of the touch signal is small, so that writing consistency of the stylus is high.

In an embodiment, the preset value is 0.25. Specifically, the preset value may be 0.25, 0.2, approximately 0.17 or 0.1, or the like.

In an embodiment, in each touch repetition unit, a quantity of the first touch electrodes or a quantity of the second touch electrodes is at least four. Specifically, the quantity of the first touch electrodes and the quantity of the second touch electrodes may be adjusted according to an actual requirement.

In an embodiment, projections of the first touch electrode and the second touch electrode on the touch electrode layer are strip-shaped. A strip shape of the first touch electrode and the second touch electrode may be understood as a rectangle or a square.

In an embodiment, one first touch sub-electrode is disposed between two adjacent first touch electrodes. The first touch sub-electrode electrically connects the two adjacent first touch electrodes. The first touch sub-electrode divides a gap between the two adjacent first touch electrodes into two first gaps, and the two first gaps are spaced apart in the second direction. The plurality of first touch sub-electrodes are spaced apart in the first direction. The second touch electrode includes a bridge arm and two second primary touch electrodes, one second primary touch electrode is disposed in each first gap, and the two second primary touch electrodes are electrically connected through the bridge arm. The first touch sub-electrode electrically connects the two adjacent first touch electrodes, so that uniformity of the magnetic fields between the first touch electrodes and the second touch electrodes is ensured, and a structure of the first grid can be further simplified.

In an embodiment, two first touch sub-electrodes are disposed between two adjacent first touch electrodes. Both the two first touch sub-electrodes are configured to electrically connect the two adjacent first touch electrodes. The two first touch sub-electrodes are spaced apart in the second direction. The two first touch sub-electrodes divide a gap between the two adjacent first touch electrodes into three first gaps, and the three first gaps are spaced apart in the second direction. The plurality of first touch sub-electrodes are spaced apart in the first direction. The second touch electrode includes two bridge arms and three second primary touch electrodes, one second primary touch electrode is disposed in each first gap, and two adjacent second primary touch electrodes are electrically connected through one bridge arm in the second direction. In this arrangement manner, uniformity of the magnetic fields between the first touch electrodes and the second touch electrodes is ensured, and strength of the first grid can be improved.

In an embodiment, each of a plurality of first touch electrodes between a first touch electrode located at a head end and a first touch electrode located at a tail end in the first direction includes a first segment and a second segment. There is a second gap between the first segment and the second segment in the second direction, and the second gap is used for communication between two adjacent first gaps, where the first gap is a first gap located between the head end and the tail end in the second direction. In the first direction, two adjacent first segments are electrically connected through one first touch sub-electrode, and two adjacent second segments are electrically connected through the other first touch sub-electrode.

In the foregoing embodiment, the second grid includes at least one second touch sub-electrode. The second touch sub-electrode is disposed in the second gap, and the second touch sub-electrode is configured to electrically connect two adjacent second primary touch electrodes in the second direction. In the second direction, a 2^{nd} primary touch electrode in the three second primary touch electrodes is a second primary touch electrode electrically connected to the second touch sub-electrode. In an embodiment, one second touch sub-electrode may be disposed in each second gap, or the second touch sub-electrode is disposed in a part of second gaps.

In an embodiment, three first touch sub-electrodes are disposed between two adjacent first touch electrodes. The three first touch sub-electrodes are spaced apart in the second direction. All the three first touch sub-electrodes are configured to electrically connect the two adjacent first touch electrodes. The three first touch sub-electrodes divide a gap between the two adjacent first touch electrodes into four first gaps, and the four first gaps are spaced apart in the second direction. The plurality of first touch sub-electrodes are spaced apart in the first direction. The second touch electrode includes three bridge arms and four third primary touch electrodes, one second primary touch electrode is disposed in each first gap, and two adjacent second primary touch electrodes are electrically connected through one bridge arm. In this arrangement manner, uniformity of the magnetic fields between the first touch electrodes and the second touch electrodes is ensured, and strength of the first grid can be improved.

In an embodiment, each of a plurality of first touch electrodes between a first touch electrode located at a head end and a first touch electrode located at a tail end in the first direction includes a first segment, a second segment, and a third segment. There is a third gap between the first segment and the second segment and a third gap between the second segment and the third segment in the second direction. The third gap is used for communication between two adjacent first gaps in the first direction, where the first gap is a first gap located between the head end and the tail end in the second direction. It may be understood that the first gap is a 2^{nd} first gap or a 3^{rd} first gap in the second direction.

In an embodiment, the second grid includes at least one second touch sub-electrode, the second touch sub-electrode is disposed in the third gap, and the second touch sub-electrode is configured to electrically connect two adjacent second primary touch electrodes. A quantity of second touch sub-electrodes may also be adjusted according to an actual requirement. That is, the second touch sub-electrode may be adjusted based on the quantity of the first touch electrodes and the quantity of the second touch electrodes.

According to a second aspect, this application further provides a touch display apparatus, including the touch display panel according to any technical solution in the first aspect. The touch display apparatus further includes a display, a packaging layer, and a blocking layer that are sequentially stacked. The touch display panel is disposed on a side that is of the blocking layer and that faces away from the packaging layer. Magnetic fields generated by the touch display panel are uniformly distributed, which contributes to writing consistency of the stylus on the display.

According to a third aspect, this application further provides an electronic system. The electronic system includes an electronic device and a stylus, the electronic device includes a middle frame and a touch display apparatus, the touch display apparatus is fastened to the middle frame, and the middle frame is configured to accommodate the stylus. When the stylus is used for writing on the touch display apparatus, writing consistency is high. The electronic device may be a foldable mobile phone, a foldable tablet computer, a foldable notebook computer, or the like.

### BRIEF DESCRIPTION OF DRAWINGS

FIG. 1 is a diagram of a structure of an electronic system according to an embodiment of this application;
FIG. 2 is a diagram of a structure of a touch display apparatus according to an embodiment of this application;
FIG. 3 is a diagram of a structure of a touch electrode layer according to an embodiment of this application;
FIG. 4 is a diagram of a structure of a touch repetition unit according to an embodiment of this application;
FIG. 5 is a diagram of another structure of a touch repetition unit according to an embodiment of this application;
FIG. 6 is a diagram of another structure of a touch repetition unit according to an embodiment of this application;
FIG. 7 is a diagram of another structure of a touch repetition unit according to an embodiment of this application;
FIG. 8 is a diagram of another structure of a touch repetition unit according to an embodiment of this application;
FIG. 9 is a diagram of another structure of a touch repetition unit according to an embodiment of this application;
FIG. 10 is a diagram of another structure of a touch repetition unit according to an embodiment of this application;
FIG. 11 is a diagram of another structure of a touch repetition unit according to an embodiment of this application; and
FIG. 12 is a diagram of another structure of a touch repetition unit according to an embodiment of this application.

### Reference numerals:

1: touch display apparatus; 10: touch display panel; 11: touch electrode layer; 11a: touch repetition unit; 110: first touch electrode; 1100: first segment; 1101: second segment; 1102: second gap; 1103: third segment; 1104: third gap; 111: first touch sub-electrode; 112: second touch electrode; 1120: bridge arm; 1121: second primary touch electrode; 113a, 113b, 113c, 113: first gap; 114: second touch sub-electrode; 12: insulation layer; 20: blocking layer; 30: packaging layer; 40: display; 50: coating; 2: middle frame; 3: stylus.

### DESCRIPTION OF EMBODIMENTS

To make the objectives, technical solutions, and advantages of this application clearer, the following further describes this application in detail with reference to the accompanying drawings.

With progress of technologies, foldable electronic devices are increasingly popular. In a folding process of the electronic device, stress and deformation of different degrees are generated when each film layer of a touch display apparatus included in the electronic device is subjected to force, and the stress and deformation generated by the film layer increase as a bending radius decreases. To reduce the stress generated by the touch display apparatus, a thickness of the touch display apparatus is usually reduced, so that the touch display apparatus is applicable to the foldable electronic device.

However, thinning the touch display apparatus results in a problem of signal distortion of a capacitive stylus to some extent during use of the capacitive stylus for writing on the touch display apparatus, which leads to poor writing consistency of the capacitive stylus.

In view of this, embodiments of this application provide a touch display panel, a touch display apparatus, and an electronic system, to resolve the foregoing problem. To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

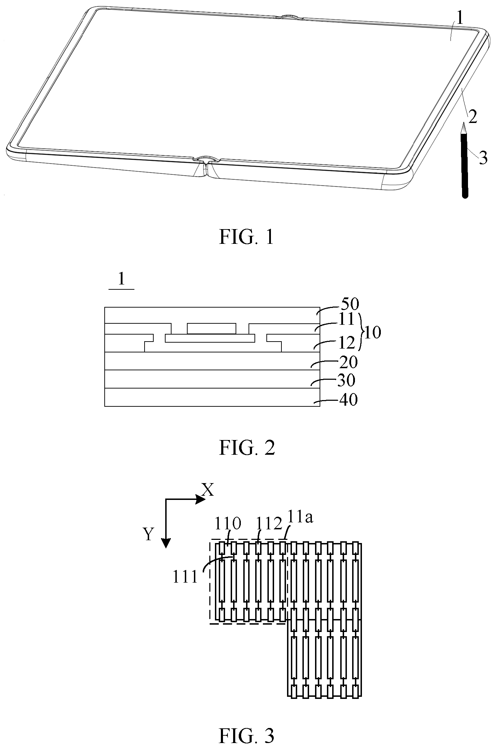

FIG. 1 is a diagram of a structure of an electronic system according to an embodiment of this application. Refer to FIG. 1. The electronic system includes an electronic device and a stylus 3. The electronic device may usually be a mobile phone, a tablet computer, or a notebook computer. Specifically, the mobile phone, the tablet computer, and the notebook computer may be a foldable mobile phone, a foldable tablet computer, and a foldable notebook computer respectively. The electronic device includes a middle frame and a touch display apparatus. The touch display apparatus 1 is fastened to a middle frame 2, and the middle frame 2 is further configured to accommodate the stylus 3.

An embodiment of this application further provides a touch display apparatus 1. The touch display apparatus 1 includes a touch display panel 10, a blocking layer 20, a packaging layer 30, and a display 40. The touch display panel 10, the blocking layer 20, the packaging layer 30, and the display 40 are sequentially stacked. The touch display apparatus 1 further includes a coating 50, and the coating 50 is disposed on a side that is of the touch display panel 10 and that faces away from the blocking layer 20. When the touch display apparatus 1 is used in a foldable electronic device, writing consistency of a stylus on the display can be ensured.

The following describes a structure of the touch display panel in detail.

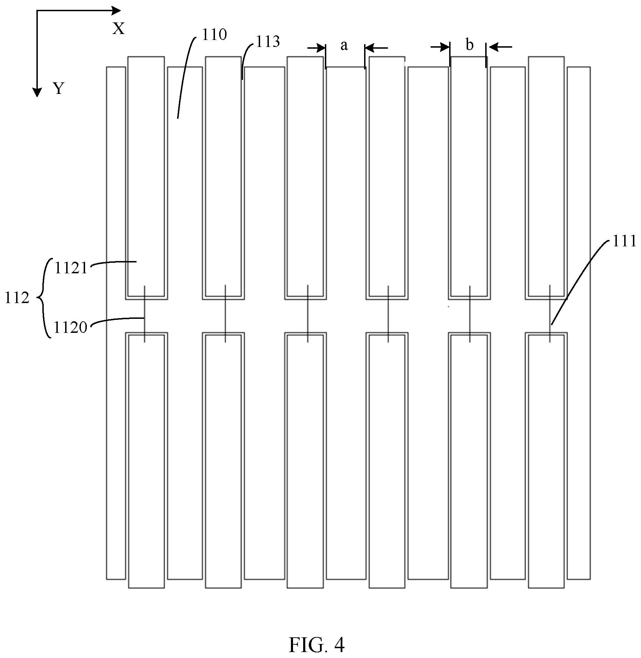

Refer to FIG. 2. The touch display panel includes a touch electrode layer and an insulation layer, and a bridge arm in the touch electrode layer bridges over the insulation layer. FIG. 3 is a diagram of a structure of a touch electrode layer according to an embodiment of this application. FIG. 4 is a diagram of a structure of a touch repetition unit according to an embodiment of this application. In FIG. 3, an X direction is a first direction, and a Y direction is a second direction. Refer to FIG. 3 and FIG. 4. The touch electrode layer includes a plurality of touch repetition units 11a. The touch repetition unit 11a includes a first grid and a second grid. The first grid includes a plurality of first touch electrodes 110 and a plurality of first touch sub-electrodes 111. The plurality of first touch electrodes 110 are spaced apart in the first direction X, and the plurality of first touch electrodes 110 all extend in the second direction Y. Every two adjacent first touch electrodes 110 in the first direction X are electrically connected through at least one first touch sub-electrode 111. The second grid includes a plurality of second touch electrodes 112, the plurality of second touch electrodes 112 are spaced apart in the first direction X, and the second touch electrode 112 extends in the second direction Y. In the first direction X, the first touch electrodes 110 and the second touch electrodes 112 are staggered, and a ratio of a width a of the first touch electrode 110 or a width b of the second touch electrode 112 to a width of the touch repetition unit 11a is less than a preset value. This arrangement manner allows for more uniform distribution of magnetic fields between the first touch electrodes 110 and the second touch electrodes 112 on a surface of the touch display panel. When a touch signal of a stylus is transmitted to the surface of the touch display panel, the touch signal does not change dramatically. That is, fluctuation in a change of the touch signal is small, so that writing consistency of the stylus is high.

It should be noted that the first grid and the second grid being insulated from each other may be understood as the first touch electrode 110, the first touch sub-electrode 111, and the second touch electrode 112 being not electrically connected.

In an embodiment, the preset value is 0.25, 0.2, approximately 0.17, or the like. Specifically, a quantity of the first touch electrodes 110 is at least four. When the quantity of the first touch electrodes 110 is four, in the first direction X, the ratio of the width a of the first touch electrode 110 to the width of the touch repetition unit 11a is 0.25. When the quantity of the first touch electrodes 110 is five, in the first direction X, the ratio of the width a of the first touch electrode 110 to the width of the touch repetition unit 11a is 0.2. When the quantity of the first touch electrodes 110 is six, in the first direction X, the ratio of the width a of the first touch electrode 110 to the width of the touch repetition unit 11a is approximately 0.17. Similarly, a quantity of the second touch electrodes 112 is at least four. When the quantity of the second touch electrodes 112 is four, in the first direction, the ratio of the width b of the second touch electrode 112 to the width of the touch repetition unit 11a is 0.25. When the quantity of the second touch electrodes 112 is five, in the first direction, the ratio of the width b of the second touch electrode 112 to the width of the touch repetition unit 11a is 0.2. When the quantity of the second touch electrodes 112 is six, in the first direction, the ratio of the width b of the second touch electrode 112 to the width of the touch repetition unit 11a is approximately 0.17. Larger quantities of the first touch electrodes 110 and the second touch electrodes 112 indicate more uniform distribution of the magnetic fields between the first touch electrodes 110 and the second touch electrodes 112 on the surface of the touch display panel and higher writing consistency of the stylus.

In the foregoing embodiment, projections of the first touch electrode 110 and the second touch electrode 112 on the touch electrode layer are strip-shaped. The strip shape may be understood as a shape such as a rectangle or a square.

There may be a plurality of specific forms of arrangement between the first grid and the second grid. An example in which there are six second touch electrodes 112 is used for description. There are five first touch electrodes 110 located between two adjacent second touch electrodes 112 in the first direction X, and first touch electrodes 110 located at two ends in the first direction X may be considered as two parts obtained through division of one first touch electrode 110. In this way, the first touch electrodes 110 and the second touch electrodes 112 are alternately distributed at least six times in the first direction X, to improve distribution uniformity of the magnetic fields between the first touch electrodes 110 and the second touch electrodes 112 on the surface of the touch display panel.

Refer to FIG. 4. In an embodiment, one first touch sub-electrode 111 is disposed between two adjacent first touch electrodes 110. The plurality of first touch sub-electrodes 111 are spaced apart in the first direction X. The first touch sub-electrode 111 electrically connects the two adjacent first touch electrodes 110. The first touch sub-electrode 111 divides a gap between the two adjacent first touch electrodes 110 into two first gaps 113, and the two first gaps 113 are spaced apart in the second direction Y. The second touch electrode 112 includes a bridge arm 1120 and two second primary touch electrodes 1121, one second primary touch electrode 1121 is disposed in each first gap 113, and the two second primary touch electrodes 1121 are electrically connected through the bridge arm 1120. When the bridge arm 1120 electrically connects the two adjacent second primary touch electrodes 1121 in the second direction Y, an insulation layer may be disposed between the bridge arm 1120 and the first grid, to prevent the bridge arm 1120 from being electrically connected to the first touch electrode 110 or the first touch sub-electrode 111. In this manner, when the touch display panel is used in a touch display apparatus, and the touch display apparatus is foldable, after a blocking layer, a packaging layer, and a display that are included in the touch display apparatus are thinned, distortion of a touch signal between the stylus and the display is small during use of the stylus for writing on the display, to improve writing consistency of the stylus.

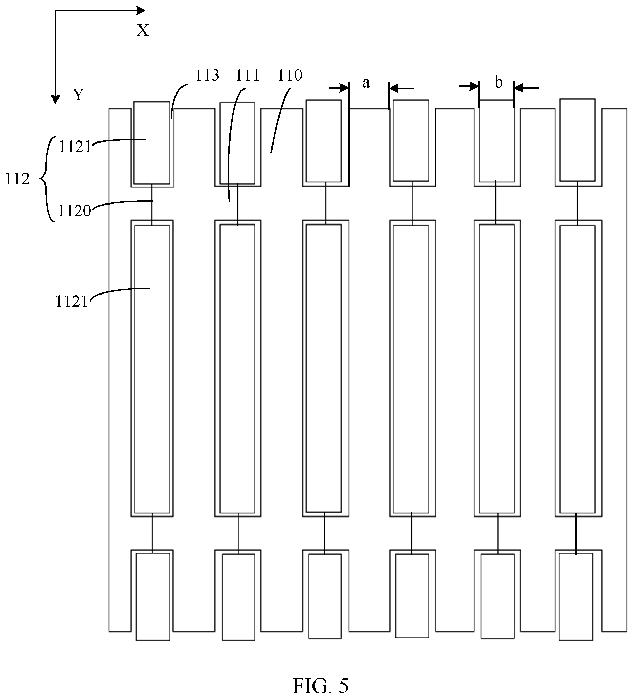

FIG. 5 is a diagram of another structure of a touch repetition unit according to an embodiment of this application. Refer to FIG. 5. In an embodiment, two first touch sub-electrodes 111 are disposed between two adjacent first touch electrodes 110. The two first touch sub-electrodes 111 electrically connect the two adjacent first touch electrodes 110. Two first touch sub-electrodes 111 between every two adjacent first touch electrodes 110 are spaced apart in the first direction X. The two first touch sub-electrodes 111 are spaced apart in the second direction Y. The two first touch sub-electrodes 111 divide a gap between the two adjacent first touch electrodes 110 into three first gaps 113, and the three first gaps 113 are spaced apart in the second direction Y. The second touch electrode 112 includes two bridge arms 1120 and three second primary touch electrodes 1121. The three second primary touch electrodes 1121 are spaced apart in the second direction Y. One second primary touch electrode 1121 is disposed in each first gap 113. One bridge arm 1120 is configured to electrically connect two second primary touch electrodes 1121 spaced apart in the second direction Y. When the bridge arm 1120 electrically connects two adjacent second primary touch electrodes 1121 in the second direction Y, an insulation layer may be disposed between the bridge arm 1120 and the first grid, to prevent the bridge arm 1120 from being electrically connected to the first touch electrode 110 or the first touch sub-electrode 111. In this manner, when the touch display panel is used in a touch display apparatus, and the touch display apparatus is foldable, after a blocking layer, a packaging layer, and a display that are included in the touch display apparatus are thinned, distortion of a touch signal between the stylus and the display is small during use of the stylus for writing on the display, to improve writing consistency of the stylus.

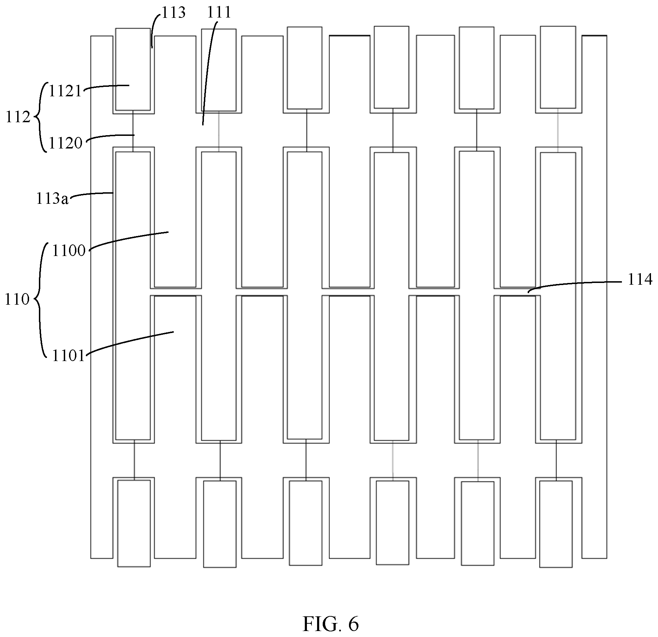

FIG. 6 is a diagram of another structure of a touch repetition unit according to an embodiment of this application. Refer to FIG. 6. In an embodiment, each of a plurality of first touch electrodes 110 between a first touch electrode 110 located at a head end and a first touch electrode 110 located at a tail end in the first direction X includes a first segment 1100 and a second segment 1101. It may be understood that the first touch electrode 110 located between two adjacent second touch electrodes 112 includes the first segment 1100 and the second segment 1101. There is a second gap 1102 between the first segment 1100 and the second segment 1101 in the second direction Y, and the second gap 1102 is used for communication between two adjacent first gaps 113a. The first gap 113a is a first gap 113 in which a 2^{nd} second primary touch electrode 1121 in the second direction Y is disposed, that is, a 2^{nd} first gap 113a in the three first gaps 113 in the second direction Y.

It should be noted that a part of first touch electrodes located between two adjacent second touch electrodes 112 include first segments 1100 and second segments 1101. That is, a quantity of second gaps 1102 may alternatively be one, two, three, or four.

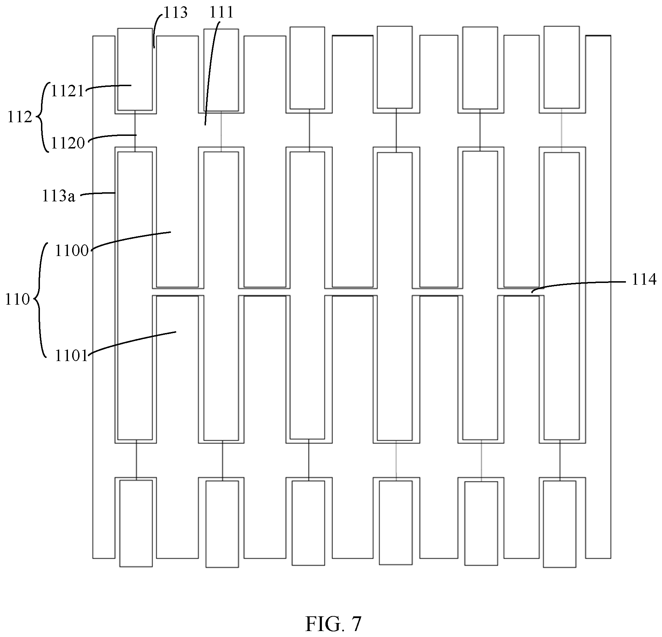

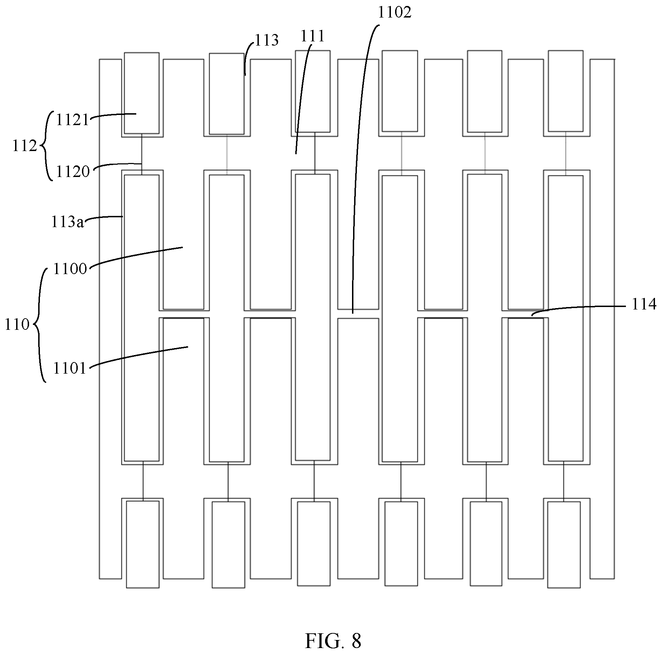

FIG. 7 is a diagram of another structure of a touch repetition unit according to an embodiment of this application. Refer to FIG. 6 and FIG. 7. In an embodiment, the second grid includes at least one second touch sub-electrode 114. The second touch sub-electrode 114 is disposed in the second gap 1102, and electrically connects two adjacent second primary touch electrodes 1121 in the second direction Y. Two adjacent second primary touch electrodes 1121 in the first direction X are electrically connected through the bridge arm 1120. A quantity of second touch sub-electrodes 114 may be one, two, three, four, or five. When the quantity of second touch sub-electrodes 114 is five, the second touch sub-electrode 114 is disposed in each of five second gaps 1102 included in the five first touch electrodes 110. The five second touch sub-electrodes 114 electrically connect the six second touch electrodes 112 spaced apart in the first direction X. When the quantity of second touch sub-electrodes 114 is four, the four second touch sub-electrodes 114 may be disposed in any four second gaps 1102. FIG. 8 is a diagram of another structure of a touch repetition unit according to an embodiment of this application. Refer to FIG. 8. No second touch sub-electrode 114 is disposed in a second gap 1102 located in the middle in the first direction X. Disposition forms corresponding to cases in which there is one, two, and three second touch sub-electrodes 114 are similar to that corresponding to a case in which there are four second touch sub-electrodes 114, and may be adjusted according to an actual requirement. Details are not described herein again.

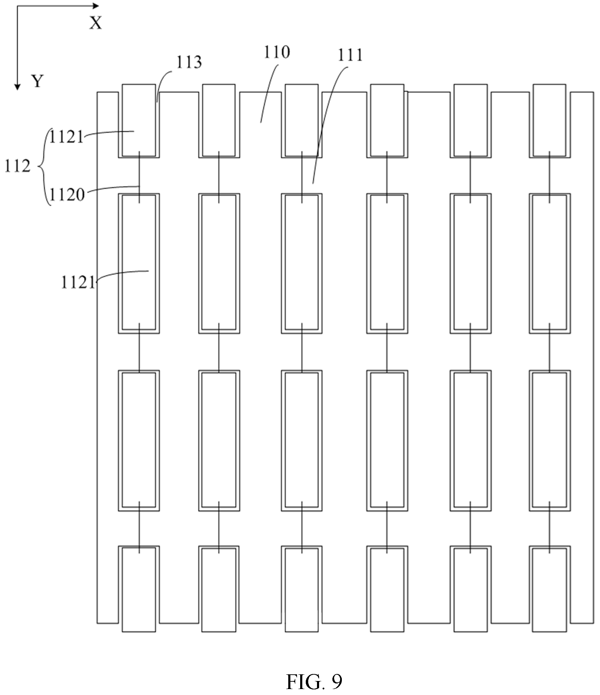

FIG. 9 is a diagram of another structure of a touch repetition unit according to an embodiment of this application. Refer to FIG. 9. In an embodiment, three first touch sub-electrodes 111 are disposed between two adjacent first touch electrodes 110, and the plurality of first touch sub-electrodes 111 are spaced apart in the first direction X. Three first touch sub-electrodes 111 are disposed between every two adjacent first touch electrodes 110. The three first touch sub-electrodes 111 are configured to electrically connect the two adjacent first touch electrodes 110. The three first touch sub-electrodes 111 between the two first touch electrodes 110 are spaced apart in the second direction Y. The three first touch sub-electrodes 111 divide a gap between two adjacent first touch electrodes 110 into four first gaps 113, and the four first gaps 113 are spaced apart in the second direction Y. The second touch electrode 112 includes three bridge arms 1120 and four second primary touch electrodes 1121. The four second primary touch electrodes 1121 are spaced apart in the second direction Y. One second primary touch electrode 1121 is disposed in each first gap 113. One bridge arm 1120 is configured to electrically connect two second primary touch electrodes 1121 spaced apart in the second direction Y. When the bridge arm 1120 electrically connects two adjacent second primary touch electrodes 1121 in the second direction Y, an insulation layer may be disposed between the bridge arm 1120 and the first grid, to prevent the bridge arm 1120 from being electrically connected to the first touch electrode 110 or the first touch sub-electrode 111.

It should be noted that a quantity of first touch sub-electrodes 111 between two adjacent first touch electrodes 110 may alternatively be four, five, or more, and a specific quantity may be adjusted according to an actual requirement. In addition, in the first direction X, for every two adjacent first touch electrodes 110, a quantity of first touch sub-electrodes 111 between the two adjacent first touch electrodes 110 may remain the same or vary.

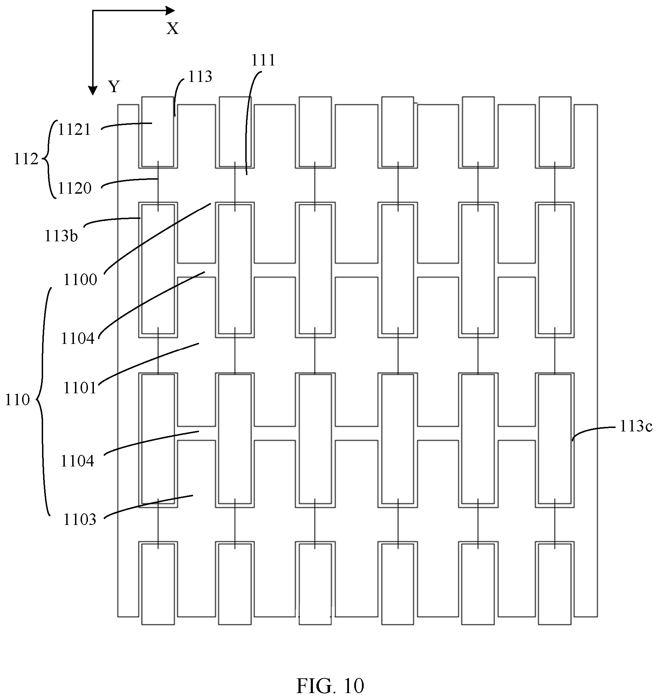

FIG. 10 is a diagram of another structure of a touch repetition unit according to an embodiment of this application. Refer to FIG. 10. In an embodiment, each of a plurality of first touch electrodes 110 between a first touch electrode 110 located at a head end and a first touch electrode 110 located at a tail end in the first direction X includes a first segment 1100, a second segment 1101, and a third segment 1103. It may be understood that the first touch electrode 110 located between two adjacent second touch electrodes 112 includes the first segment 1100, the second segment 1101, and the third segment 1103. There are two third gaps 1104 between the first segment 1100, the second segment 1101, and the third segment 1103 in the second direction Y, and the third gap 1104 is used for communication between two adjacent first gaps 113 in the first direction. The first gap 113 is a first gap 113b in which a 2^{nd} second primary touch electrode 1121 in the second direction Y is disposed or a first gap 113c in which a 3^{rd} second primary touch electrode 1121 in the second direction Y is disposed.

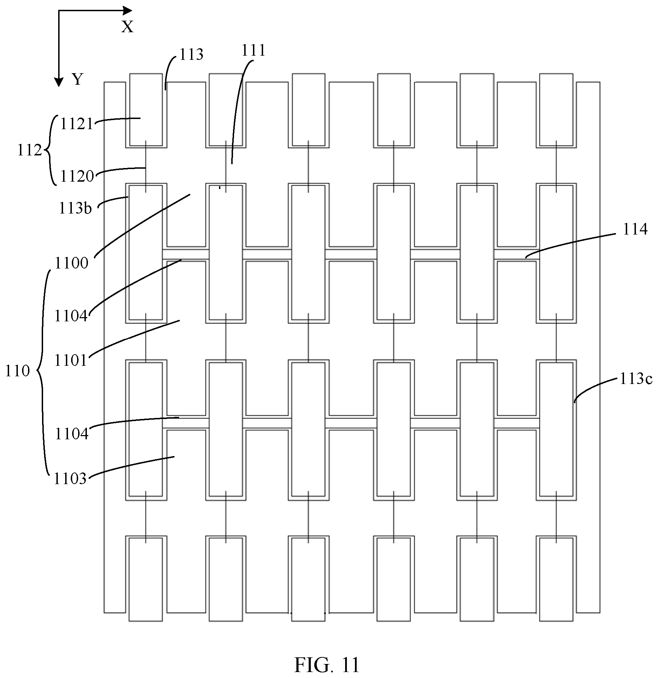

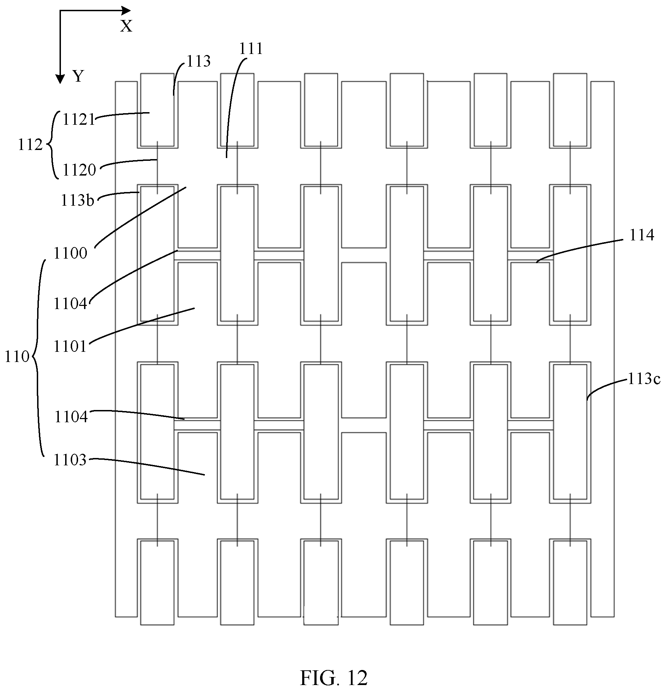

FIG. 11 is a diagram of another structure of a touch repetition unit according to an embodiment of this application. Refer to FIG. 10 and FIG. 11. In an embodiment, the second grid includes at least one second touch sub-electrode 114. The second touch sub-electrode 114 is disposed in the third gap 1104, and electrically connects two adjacent second primary touch electrodes 1121 in the second direction Y. Two adjacent second primary touch electrodes 1121 in the first direction X are electrically connected through the bridge arm 1120. A quantity of second touch sub-electrodes 114 may be one to 10. When the quantity of second touch sub-electrodes 114 is 10, the second touch sub-electrode 114 is disposed in each of ten third gaps 1104 included in the five first touch electrodes 110. The ten second touch sub-electrodes 114 electrically connect the six second touch electrodes 112 spaced apart in the first direction X. Specifically, the second touch sub-electrode 114 electrically connects second primary touch electrodes 1121 disposed in first gaps 113b, and further electrically connects second primary touch electrodes 1121 disposed in 113c. When the quantity of second touch sub-electrodes 114 is eight, four of the second touch sub-electrodes 114 are disposed in any four third gaps 1104 used between five first gaps 113b, and other four of the second touch sub-electrodes 114 are disposed in any four third gaps 1104 used between five first gaps 113c. FIG. 12 is a diagram of another structure of a touch repetition unit according to an embodiment of this application. Refer to FIG. 12. No second touch sub-electrode 114 is disposed in two third gaps 1104 located in the middle in the first direction X. A disposition form corresponding to a case in which there is another quantity of second touch sub-electrodes 114 is similar to those corresponding to cases in which there are eight and ten second touch sub-electrodes 114, and may be adjusted according to an actual requirement. Details are not described herein again.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A touch display panel, comprising:
a touch electrode layer, wherein the touch electrode layer comprises a plurality of touch repetition units, the touch repetition unit comprises a first grid and a second grid that are insulated from each other, the first grid comprises a plurality of first touch electrodes and a plurality of first touch sub-electrodes, the plurality of first touch electrodes are spaced apart in a first direction, the first touch electrode extends in a second direction, and every two adjacent first touch electrodes are electrically connected through at least one first touch sub-electrode;
the second grid comprises a plurality of second touch electrodes, the plurality of second touch electrodes are spaced apart in the first direction, and the second touch electrode extends in the second direction; and
in the first direction, the first touch electrodes and the second touch electrodes are staggered, and a ratio of a width of the first touch electrode or a width of the second touch electrode to a width of the touch repetition unit is less than a preset value.

2. The touch display panel according to claim 1, wherein the preset value is 0.25.

3. The touch display panel according to claim 1 or 2, wherein in each touch repetition unit, a quantity of the first touch electrodes or a quantity of the second touch electrodes is at least four.

4. The touch display panel according to claim 1, wherein projections of the first touch electrode and the second touch electrode on the touch electrode layer are strip-shaped.

5. The touch display panel according to any one of claims 1 to 4, wherein one first touch sub-electrode is disposed between two adjacent first touch electrodes, the first touch sub-electrode electrically connects the two adjacent first touch electrodes, the first touch sub-electrode divides a gap between the two adjacent first touch electrodes into two first gaps, the two first gaps are spaced apart in the second direction, and the plurality of first touch sub-electrodes are spaced apart in the first direction; and
the second touch electrode comprises a bridge arm and two second primary touch electrodes, one second primary touch electrode is disposed in each first gap, and the two second primary touch electrodes are electrically connected through the bridge arm.

6. The touch display panel according to any one of claims 1 to 4, wherein two first touch sub-electrodes are disposed between two adjacent first touch electrodes, both the two first touch sub-electrodes are configured to electrically connect the two adjacent first touch electrodes, the two first touch sub-electrodes are spaced apart in the second direction, the two first touch sub-electrodes divide a gap between the two adjacent first touch electrodes into three first gaps, the three first gaps are spaced apart in the second direction, and the plurality of first touch sub-electrodes are spaced apart in the first direction; and
the second touch electrode comprises two bridge arms and three second primary touch electrodes, one second primary touch electrode is disposed in each first gap, and two adjacent second primary touch electrodes are electrically connected through one bridge arm.

7. The touch display panel according to claim 6, wherein each of a plurality of first touch electrodes between a first touch electrode located at a head end and a first touch electrode located at a tail end in the first direction comprises a first segment and a second segment, there is a second gap between the first segment and the second segment in the second direction, and the second gap is used for communication between two adjacent first gaps; and
the first gap is a first gap located between the head end and the tail end in the second direction.

8. The touch display panel according to claim 7, wherein the second grid comprises at least one second touch sub-electrode, the second touch sub-electrode is disposed in the second gap, and the second touch sub-electrode is configured to electrically connect two adjacent second primary touch electrodes in the second direction.

9. The touch display panel according to any one of claims 1 to 4, wherein three first touch sub-electrodes are disposed between two adjacent first touch electrodes, the three first touch sub-electrodes are spaced apart in the second direction, all the three first touch sub-electrodes are configured to electrically connect the two adjacent first touch electrodes, the three first touch sub-electrodes divide a gap between the two adjacent first touch electrodes into four first gaps, the four first gaps are spaced apart in the second direction, and the plurality of first touch sub-electrodes are spaced apart in the first direction; and
the second touch electrode comprises three bridge arms and four third primary touch electrodes, one second primary touch electrode is disposed in each first gap, and two adjacent second primary touch electrodes are electrically connected through one bridge arm.

10. The touch display panel according to claim 9, wherein each of a plurality of first touch electrodes between a first touch electrode located at a head end and a first touch electrode located at a tail end in the first direction comprises a first segment, a second segment, and a third segment, there is a third gap between the first segment and the second segment and a third gap between the second segment and the third segment in the second direction, and the third gap is used for communication between two adjacent first gaps in the first direction; and
the first gap is a first gap located between the head end and the tail end in the second direction.

11. The touch display panel according to claim 10, wherein the second grid comprises at least one second touch sub-electrode, the second touch sub-electrode is disposed in the third gap, and the second touch sub-electrode is configured to electrically connect two adjacent second primary touch electrodes.

12. A touch display apparatus, comprising the touch display panel according to any one of claims 1 to 11.

13. The touch display apparatus according to claim 12, wherein the touch display apparatus further comprises a display, a packaging layer, and a blocking layer that are sequentially stacked, and the touch display panel is disposed on a side that is of the blocking layer and that faces away from the packaging layer.

14. An electronic system, wherein the electronic system comprises an electronic device and a stylus, the electronic device comprises a middle frame and the touch display apparatus according to claim 12 or 13, the touch display apparatus is fastened to the middle frame, and the middle frame is configured to accommodate the stylus.
